# EUROPÄISCHE PATENTSCHRIFT

(11) **EP 4 237 305 B1**
(45) Veröffentlichungstag und Bekanntmachung des Hinweises auf die Patenterteilung: **18.06.2025**
(21) Anmeldenummer: 21790423.4
(22) Anmeldetag: 08.10.2021
(51) Int. Cl.: B60W 60/00, B60W 30/09, B60W 30/095, B60W 40/04

(54) **VERFAHREN UND STEUERGERÄT ZUR SITUATIONSABHÄNGIGEN FESTLEGUNG VON BEOBACHTUNGSBEREICHEN FÜR ZUMINDEST TEILAUTONOM BETRIEBENE KRAFTFAHRZEUGE**
METHOD AND CONTROL DEVICE FOR THE SITUATION-DEPENDENT DETERMINATION OF OBSERVATION AREAS FOR MOTOR VEHICLES OPERATED IN AN AT LEAST PARTIALLY AUTONOMOUS MANNER
PROCÉDÉ ET DISPOSITIF DE COMMANDE POUR LA DÉTERMINATION, EN FONCTION DE LA SITUATION, DE ZONES D'OBSERVATION POUR DES VÉHICULES À MOTEUR FONCTIONNANT DE MANIÈRE AU MOINS PARTIELLEMENT AUTONOME

(30) Priorität: 28.10.2020 DE 102020213514
(43) Veröffentlichungstag der Anmeldung: 06.09.2023
(73) Patentinhaber: VOLKSWAGEN AKTIENGESELLSCHAFT, 38440 Wolfsburg (DE)
(72) Erfinder: MERFELS, Christian, 38102 Braunschweig (DE); DERENDARZ, Wojciech Waclaw, 38106 Braunschweig (DE); LAST, Carsten, 38102 Braunschweig (DE)
(86) Internationale Anmeldenummer: PCT/EP2021/077799
(87) Internationale Veröffentlichungsnummer: WO 2022/089913

(56) Entgegenhaltungen:
- EP-B1- 3 428 028
- WO-A1-2019/181708
- DE-B3- 102005 051 805
- DE-T5- 112019 001 511
- US-A1- 2019 088 125

## Beschreibung

Die Erfindung betrifft ein Verfahren zum zumindest teilautonomen Betreiben eines Kraftfahrzeugs und insbesondere zum geeigneten Festlegen von Beobachtungsbereichen für diesen Betrieb. Ferner betrifft die Erfindung ein Steuergerät zum Ausführen eines solchen Verfahrens. Bei dem Kraftfahrzeug kann es sich insbesondere um einen Personenkraftwagen oder einen Lastkraftwagen handeln.

Bei zumindest einem teilautonomen (oder auch teilautomatischen) Betrieb eines Kraftfahrzeugs kann das Kraftfahrzeug typischerweise fahrerautonom Lenkbewegungen und/oder Beschleunigungsvorgänge ausführen. Dies erfordert, dass das Kraftfahrzeug sein Umfeld beobachtet oder, mit anderen Worten, überwacht oder erfasst. Insbesondere sollen andere Verkehrsteilnehmer erfasst werden, mit denen ein Konflikt und insbesondere eine Kollision drohen könnte. Für die Beobachtung des Umfelds (oder auch deren Erfassung oder Überwachung) kommen verschiedenste Sensoren zum Einsatz, insbesondere Kamerasysteme, Lidarsensoren, Radarsensoren oder Ultraschallsensoren. Auch sogenannte V2X-Informationen können ausgewertet werden, die von einer digitalen Verkehrsinfrastruktur an das Kraftfahrzeug übermittelt werden. Diese können z.B. eine aktuelle Belegung von Fahrspuren oder Fußgängerüberwegen angeben. Auch bei der vorliegenden Lösung können sämtliche der vorstehend genannten Sensoren und/oder Informationsquellen zur Umfeldbeobachtung verwendet werden.

Eine Herausforderung beim zumindest teilautonomen Betrieb eines Kraftfahrzeugs ist es bisher, festzulegen, welche konkreten Bereiche der Umgebung vor dem Durchführen geplanter Fahrmanöver zu beobachten sind. Genauer gesagt ist es bisher schwierig, festzulegen, welche Bereiche der Umgebung zum Ausschließen von Konflikten mit anderen Verkehrsteilnehmern zu beobachten sind, bevor ein geplantes Fahrmanöver durchgeführt werden kann. Bei unzutreffender Festlegung der Beobachtungsbereiche können Fahrmanöver unnötig verzögert werden oder können unerwünschte Sicherheitsrisiken entstehen. Auch ist es bisher schwierig, mit Situationen umzugehen, in denen ein Beobachtungsbereich aus Fahrzeugsicht nicht vollständig beobachtbar (d.h. sensorisch erfassbar) ist, da er beispielsweise teilweise verdeckt wird.

Die DE 10 2016 100 737 A1 offenbart das Definieren von Beobachtungsbereichen als informationsrelevante Bereiche und behandelt insbesondere das Szenario, dass derartige Bereiche potentiell durch ein Hindernisobjekt aus Fahrzeugsicht verdeckt sind. Dieser Stand der Technik beschäftigt sich aber nicht mit einer möglichst situationsgerechten Festlegung von Beobachtungsbereichen.

Aus der EP 3 428 028 B1 ist ein Verfahren zum zumindest teilautonomen Betreiben eines Kraftfahrzeugs bekannt mit folgenden Schritten:
- Erhalten wenigstens eines potentiellen Konfliktbereichs, in dem ein Konfliktpotential mit anderen Verkehrsteilnehmern besteht, wobei der Konfliktbereich von dem Kraftfahrzeug gemäß einem geplanten Fahrmanöver befahren werden soll;
- Ermitteln wenigstens eines Beobachtungsbereichs, der für das Befahren des Konfliktbereichs zum Vermeiden von Konflikten mit den anderen Verkehrsteilnehmern zu beobachten ist, wobei wenigstens eine Abmessung des Beobachtungsbereichs von einem beobachteten Zustand einer Verkehrsinfrastruktur abhängig gewählt wird.

Aus der US 2019/088125 A1 ist ein Verfahren zum zumindest teilautonomen Betreiben eines Kraftfahrzeugs bekannt mit folgenden Schritten:
- Erhalten wenigstens eines potentiellen Konfliktbereichs, in dem ein Konfliktpotential mit anderen Verkehrsteilnehmern besteht, wobei der Konfliktbereich von dem Kraftfahrzeug gemäß einem geplanten Fahrmanöver befahren werden soll;
- Ermitteln wenigstens eines Beobachtungsbereichs, der für das Befahren des Konfliktbereichs zum Vermeiden von Konflikten mit den anderen Verkehrsteilnehmern zu beobachten ist, wobei wenigstens eine Abmessung des Beobachtungsbereichs von einer Geschwindigkeit des Kraftfahrzeugs abhängig ist.

Eine Aufgabe der Erfindung besteht darin, den Betrieb von zumindest teilautonom betriebenen Kraftfahrzeugen zu verbessern, insbesondere hinsichtlich der zur Durchführung von Fahrmanövern definierten Beobachtungsbereichen.

Diese Aufgabe wird durch ein Verfahren mit den Merkmalen von Anspruch 1 und durch ein Steuergerät gemäß dem nebengeordneten Anspruch gelöst. Vorteilhafte Weiterbildungen sind in den abhängigen Ansprüchen angegeben.

Die Erfindung sieht allgemein vor, wenigstens eine Abmessung eines Beobachtungsbereichs situationsabhängig festzulegen, also insbesondere in Echtzeit und/oder dynamisch während des Fahrzeugbetriebs zu bestimmen. Hierfür schlägt die Erfindung geeignete Größen, Parameter und/oder Eigenschaften vor, die zur Abmessungsfestlegung bestimmt und/oder herangezogen werden können. Auf diese Weise ist sichergestellt, dass der Beobachtungsbereich tatsächlich situationsgerecht ist, also nicht unnötig groß ausfällt, aber auch nicht unangemessen klein. Folglich können Verzögerungen bei der Durchführung des Fahrmanövers verhindert werden, die bei einem unnötig großen Beobachtungsbereich wahrscheinlich wären. Ebenso können Sicherheitsrisiken vermieden werden, die bei einem unangemessen kleinen Beobachtungsbereich auftreten würden.

Insbesondere vorgeschlagen wird ein Verfahren zum zumindest teilautonomen (und vorzugsweise automatischen und/oder vollautonomen) Betreiben eines Kraftfahrzeugs, mit:
- Erhalten wenigstens eines potentiellen (virtuellen) Konfliktbereichs, in dem ein Konfliktpotential mit anderen Verkehrsteilnehmern besteht, wobei der Konfliktbereich von dem Kraftfahrzeug gemäß einem geplanten Fahrmanöver befahren werden soll (insbesondere durchfahren und/oder gekreuzt werden soll);
- Ermitteln wenigstens eines (virtuellen) Beobachtungsbereichs, der für das Befahren des Konfliktbereichs zum Vermeiden von Konflikten mit den anderen Verkehrsteilnehmern zu beobachten ist (insbesondere sensorisch zu beobachten oder auch sensorisch zu überwachen und/oder sensorisch zu erfassen ist);
wobei wenigstens eine Abmessung (oder auch Dimension) des Beobachtungsbereichs unter Berücksichtigung wenigstens einer der folgenden Parameter festgelegt wird:
a) einer Geschwindigkeit des Kraftfahrzeugs;
b) einer Art eines in dem Beobachtungsbereich erwarteten Verkehrsteilnehmers;
c) einem beobachteten Zustand der Verkehrsinfrastruktur.

Der Konfliktbereich und der Beobachtungsbereich können jeweils Bereichen der Fahrzeugumgebung entsprechen und/oder diese abbilden oder modellieren. Insbesondere können der Konfliktbereich und der Beobachtungsbereich wenigstens zweidimensional sein. Zusätzlich oder alternativ können sie eine Fläche der Umgebung und/oder eines Umgebungsmodells des Kraftfahrzeugs (oder mit anderen Worten Umfeldmodells oder Umweltmodells) umfassen oder abdecken.

Während des zumindest teilautonomen Betriebs des Kraftfahrzeugs findet bekanntermaßen eine Manöverplanung statt, insbesondere im Kontext einer Fahrroutenplanung und/oder des dynamischen Reagierens auf aktuelle Verkehrsereignisse (z.B. zum Durchführen von Spurwechsel- oder Überholvorgängen). Es ist daher bevorzugt vorgesehen, für entsprechend geplante Fahrmanöver diejenigen Bereiche der Fahrzeugumgebung zu ermitteln, in denen Konflikte mit anderen Verkehrsteilnehmern drohen. Hierbei kann es sich z.B. um potentielle Aufenthaltsbereiche anderer Verkehrsteilnehmer handeln, die von dem Kraftfahrzeug während der Durchführung des Fahrmanövers ebenfalls befahren werden. Beispiele potentieller Konfliktbereiche sind zu kreuzende Fahrspuren, anvisierte Aufenthaltsbereiche auf benachbarten Fahrspuren im Kontext eines Spurwechsels, überquerte Fußgängerüberwege oder gekreuzte Fahrradwege. Derartige Konfliktbereiche können dynamisch ermittelt werden, beispielsweise bei dynamisch geplanten Fahrmanövern wie einem Spurwechsel. Sie können, zusätzlich oder alternativ, anhand oder als Bestandteil von Karteninformationen vorab ermittelt werden und beispielsweise während des Fahrzeugbetriebs ausgelesen und dadurch erhalten werden. Beispielsweise können basierend auf den Karteninformationen Konfliktbereiche vorab bestimmten Bereichen der Karte zugeordnet werden, beispielsweise Kreuzungen, Fußgängerüberwegen, Fahrradwegen, Einmündungen und dergleichen.

Unter dem Beobachten eines Beobachtungsbereichs kann verstanden werden, dass eine gezielte Überwachung und insbesondere eine sensorische Erfassung des Beobachtungsbereichs stattfindet, um auszuschließen, dass sich dort andere Verkehrsteilnehmer aufhalten (zumindest andere Verkehrsteilnehmer einer bestimmten Art). Bevorzugt wird das geplante Fahrmanöver nur dann in einer ursprünglich geplanten Weise durchgeführt (also beispielsweise ohne signifikante Geschwindigkeitsänderung und/oder zu einem geplanten Zeitpunkt), wenn der Beobachtungsbereich frei von anderen Verkehrsteilnehmern ist.

Weiter umfasst das Verfahren auch das Ermitteln eines durch das Kraftfahrzeug beobachtbaren Anteils des Beobachtungsbereichs und das darauf basierende Steuern des Befahrens des Konfliktbereichs. Der beobachtbare Anteil (insbesondere dessen Ausmaß) kann als Zusatzbedingung zum Durchführen des Fahrmanövers herangezogen werden. Anders ausgedrückt wird der Konfliktbereich bevorzugt auch unter Berücksichtigung des beobachtbaren Anteils von dem Kraftfahrzeug befahren bzw. wird das Fahrmanöver und/oder der Fahrzeugbetrieb auch basierend auf diesem beobachtbaren Anteil gesteuert. Nimmt dieser den gesamten Beobachtungsbereich oder zumindest einen gewünschten Mindestanteil ein, kann das Fahrmanöver in einer geplanten Weise durchgeführt werden, beispielsweise ohne zusätzliche Wartezeiten oder Abbremsungen. Ist der Beobachtungsbereich aber nicht zufriedenstellend (sensorisch) beobachtbar und der beobachtbare Anteil unzulässig klein, können abweichende Maßnahmen ergriffen und kann das geplante Fahrmanöver verändert und/oder verzögert werden.

Zum Ermitteln des beobachtbaren Anteils kann ein aktueller Sensorerfassungsbereich des Kraftahrzeugs gemäß aus dem Stand der Technik bekannten Ansätzen bestimmt werden, siehe beispielsweise die einleitend zitierte DE 10 2016 100 737 A1. Es kann also eine Art Sensorbeobachtungsbereich oder auch Sensorerfassungsbereich von bevorzugt jeglichen relevanten Umfeldsensoren des Kraftfahrzeugs bestimmt werden. Der beobachtbare Anteil kann einem Überdeckungsbereich dieses Sensorerfassungsbereichs und des Beobachtungsbereichs entsprechen. Die Bereiche und insbesondere deren etwaige Überdeckung können wiederum mit Hilfe eines Umfeldmodells des Fahrzeugs ermittelt werden.

Das Kraftfahrzeug kann auch als Egofahrzeug bezeichnet werden. Eine Geschwindigkeit hiervon kann über herkömmliche Geschwindigkeitssensoren ermittelt werden. Die Art von in dem Beobachtungsbereich erwarteten Verkehrsteilnehmern kann vordefiniert sein und beispielsweise anhand von Karteninformationen bestimmt werden. Beispielsweise kann ermittelt werden, welche Arten von Verkehrsinfrastruktur und/oder Verkehrswegen in dem Beobachtungsbereich liegen, wofür insbesondere Karteninformationen herangezogen werden können. Darauf basierend kann bestimmt werden, welche Verkehrsteilnehmer dieser erfassten Verkehrsinfrastruktur und/oder diesen erfassten Verkehrswegen zugeordnet sind, dort also erwartet werden (beispielsweise Fußgänger auf Fußwegen oder Fußgängerüberwegen, Fahrradfahrer auf Fahrradwegen und Kraftfahrzeuge auf Straßenabschnitten).

Bei dem beobachteten Zustand der Verkehrsinfrastruktur kann es sich um einen von dem Kraftfahrzeug sensorisch erfassten Zustand der Verkehrsinfrastruktur handeln. Hierdurch können Abweichungen zwischen z.B. Karteninformationen und tatsächlich vorliegenden Zuständen der Verkehrsinfrastruktur ermittelt werden, also ob dort unerwartete Störungen z.B. aufgrund von Baustellen, Staus oder Unfällen vorliegen.

Die Abmessung des Beobachtungsbereichs kann virtuell bzw. datenbasiert festgelegt werden, beispielsweise durch entsprechendes Dimensionieren des virtuellen Beobachtungsbereichs in einem Umfeldmodell.

Weiter vorgesehen ist das Ermitteln eines durch das Kraftfahrzeug beobachtbaren (d.h. sensorisch einsehbaren, sensorisch erfassbaren oder sensorisch überwachbaren) Anteils des Beobachtungsbereichs und das darauf basierende Steuern des Befahrens des Konfliktbereichs. Vorzugsweise wird dann, wenn der beobachtbare Anteil unterhalb eines Mindestanteils (an dem Beobachtungsbereich) liegt, eine Geschwindigkeit des Kraftfahrzeugs reduziert. Der Mindestanteil kann auch 100 % betragen, d.h. eine vollständige Beobachtbarkeit kann gefordert sein.

Durch die Geschwindigkeitsreduzierung kann sich das Kraftfahrzeug sozusagen in den Konfliktbereich hineintasten, um rechtzeitig auf nicht erkannte Verkehrsteilnehmer zu reagieren, die sich in dem nicht beobachtbaren Anteil des Beobachtungsbereichs befinden oder befunden haben. Auch kann hierdurch die Wahrscheinlichkeit erhöht werden, dass bei zunehmender Einfahrt in den Konfliktbereich der nicht beobachtbare Anteil verringert wird (z.B. aufgrund eines entsprechend geänderten Erfassungswinkels der Fahrzeugsensoren in Bezug auf die Umgebung). Ferner kann durch die reduzierte Geschwindigkeit, die auch auf eine Geschwindigkeit von 0 km/h zumindest temporär reduziert werden kann (also in einem zumindest temporären Anhalten resultieren kann), Zeit zum Erfassen weiterer Informationen gewonnen werden. Beispielsweise kann dann in der nachstehend geschilderten Weise bestimmt werden, ob es realistisch ist, dass sich in dem nicht beobachtbaren Anteil tatsächlich ein anderer erwarteter Verkehrsteilnehmer befindet, oder ob, wenn dies der Fall wäre, dieser nicht bereits in den beobachtbaren Anteil hätte einfahren müssen.

Es versteht sich, dass zusätzlich oder alternativ auch ein nicht-beobachtbarer Anteil des Beobachtungsbereichs bestimmt werden kann. Zum Sicherstellen einer ausreichenden Beobachtbarkeit kann ermittelt werden, ob dieser Anteil unterhalb eines zulässigen Maximalwerts liegt. Der beobachtbare und nicht- beobachtbare Anteil können einander entsprechen und/oder eindeutig ineinander umrechenbar sein. Sie können zum Beispiel stets gemeinsam 100% des Beobachtungsbereichs einnehmen. Somit können Betrachtungen auf Basis des beobachtbaren Anteils auch stets gleichbedeutend mit Betrachtungen auf Basis des nicht-beobachtbaren Anteils sein, und umgekehrt.

Entsprechend sieht das Verfahren dann, wenn der beobachtbare Anteil unterhalb eines (zulässigen und/oder vordefinierten) Mindestanteils und/oder nicht-beobachtbare Anteil oberhalb eines (zulässigen und/oder vordefinierten) Maximalanteils liegt, vor:
- Erhalten wenigstes einer Art von einem in dem Beobachtungsbereich erwarteten Verkehrsteilnehmer (z.B. in der hierin geschilderten Weise anhand von Karteninformationen);
- Bestimmen, dass sich in dem Beobachtungsbereich kein anderer Verkehrsteilnehmer befindet, auf Basis des beobachtbaren Anteils des Beobachtungsbereichs und der Art des Verkehrsteilnehmers.

Wie erwähnt, kann anhand der Art des Verkehrsteilnehmers auch eine erwartete Geschwindigkeit des Verkehrsteilnehmers bestimmt werden. Darauf basierend kann berechnet werden, ob dieser Verkehrsteilnehmer bei einem Aufenthalt in dem verbleibenden nicht beobachtbaren Anteil des Beobachtungsbereichs und der Annahme, dass dieser dort mit der erwarteten Geschwindigkeit fährt, nicht bereits in den beobachtbaren Anteil hätte einfahren müssen. Ist dies z.B. aufgrund einer zwischenzeitlich verstrichenen Zeit nicht erfolgt, kann davon ausgegangen werden, dass sich in dem nicht beobachtbaren Anteil kein Verkehrsteilnehmer der erwarteten Art und/oder mit der erwarteten Geschwindigkeit befindet.

Ebenso kann aber für den erwarteten Verkehrsteilnehmer eine erwartete Größe bestimmt werden (z.B. eine Längenabmessung). Ist ein nicht-beobachtbarer Anteil kleiner als die erwartete Größe, kann darauf geschlossen werden, dass sich darin kein anderer Verkehrsteilnehmer befindet.

Eine Weiterbildung sieht vor, dass die Abmessung nach vorstehender Variante a) festgelegt wird und mit zunehmender Geschwindigkeit des Kraftfahrzeugs höher ausfällt. Hierdurch kann berücksichtigt werden, dass bei höherer Geschwindigkeit auch höhere Bremswege anfallen. In einem weiter vom Fahrzeug entfernten Bereich können folglich selbst bei Einleiten einer Bremsung noch Konflikte mit anderen Verkehrsteilnehmern auftreten. Diese Weiterbildung ist insbesondere dann vorteilhaft, wenn das geplante Fahrmanöver das Zufahren auf und/oder Überqueren von einem potentiellen Hindernis oder Konfliktbereich betrifft, beispielsweise das Zufahren auf einen Fußgängerüberweg (z.B. einen Zebrastreifen), einem Ein- und/oder Ausfahrtsbereich oder einer Kreuzung, insbesondere wenn sich das Kraftfahrzeug auf einer Vorfahrtsstraße befindet. Dass ein solches Hindernis oder Konfliktbereich vorliegt kann z.B. auf Basis von Karteninformationen bestimmt werden.

Gemäß einem weiteren Aspekt und aufbauend auf der vorstehenden Variante a) ist vorgesehen, dass dann, wenn in dem Konfliktbereich eine von anderen Verkehrsteilnehmern befahrene Vorfahrtsstraße liegt, die Abmessung mit zunehmender Geschwindigkeit des Kraftfahrzeugs geringer ausfällt. Dem liegt der Gedanke zugrunde, dass das Kraftfahrzeug den Konfliktbereich aufgrund der erhöhten Geschwindigkeit auch entsprechend schnell wieder verlassen kann. Folglich ist eine umfassende Beobachtung der Umgebung zur Konflikt- und insbesondere Kollisionsvermeidung bei hoher eigener Geschwindigkeit nicht zwingend erforderlich. Diese Variante betrifft z.B. das Kreuzen der Vorfahrtsstraße und/oder Einbiegen in eine entsprechende Vorfahrtsstraße. Dass es sich um eine Vorfahrtsstraße handelt kann z.B. auf Basis von Karteninformationen bestimmt werden.

Gemäß einem weiteren Aspekt und aufbauend auf der vorstehenden Variante b) wird eine erwartete Geschwindigkeit des erwarteten Verkehrsteilnehmers erhalten und die Abmessung fällt mit zunehmender erwarteter Geschwindigkeit größer aus und/oder größer aus, desto größer die erwartete Geschwindigkeit ist. Jedem erwarteten Verkehrsteilnehmer, der beispielsweise in der vorstehend erläuterten Art auf Basis von Karteninformationen bestimmt werden kann, können erwartete Geschwindigkeiten zugeordnet sein. Beispielsweise können erwarteten Verkehrsteilnehmern wie Fußgängern oder Fahrradfahrern gewisse Geschwindigkeitsbereiche von wenigen Kilometern pro Stunde zugeordnet werden (z.B. maximal 35 km/h bei Fahrradfahrern). Ist der erwartete Verkehrsteilnehmer ein Kraftfahrzeug, kann z.B. je nach aktuell befahrenem Verkehrsweg (z.B. einer Straße innerorts oder außerorts) eine erwartete Geschwindigkeit nach Maßgabe dort geltender Höchstgeschwindigkeiten zuzüglich eines etwaigen Sicherheitspuffers als erwartete Geschwindigkeit zugrunde gelegt werden.

Allgemein ist zum Vermeiden von Konflikten vorgesehen, dass das Egofahrzeug stets eine gewisse Mindestdistanz und/oder Differenzgeschwindigkeit zu anderen Verkehrsteilnehmern aufrechterhalten sollte. Insbesondere kann es angestrebt werden, dass das Kraftfahrzeug nach Einfahren in einen und/oder allgemein nach oder während dem Befahren eines Konfliktbereichs zu anderen Verkehrsteilnehmern möglichst zeitnah eine entsprechende Mindestdistanz oder Differenzgeschwindigkeit aufbaut. Entsprechend können sich auch die Abmessungen des Beobachtungsbereichs an dem Erfordernis der zu erzielenden Differenzgeschwindigkeit und/oder Mindestgeschwindigkeit orientieren. Weisen andere Verkehrsteilnehmer erwartungsgemäß hohe Geschwindigkeiten im Fahrzeugumfeld auf, kann es daher bevorzugt sein, den Beobachtungsbereich ausreichend groß zu wählen. Für das Egofahrzeug verbleibt dann nämlich weniger Zeit und/oder Raum, um selbst den Mindestabstand und/oder die Differenzgeschwindigkeit z.B. bei einem Fahrspurwechsel oder dem Abbiegen in eine andere Straße gegenüber diesen Verkehrsteilnehmern aufzubauen. Folglich sollte der Beobachtungsbereich derart groß gewählt sein, dass sichergestellt wird, dass auch Verkehrsteilnehmer in einem großen Abstand zum Egofahrzeug erfassbar sind.

Wie erwähnt, kann die erwartete Geschwindigkeit unter Berücksichtigung von Karteninformationen ermittelt werden. Darauf basierend kann bestimmt werden, welche Art von Verkehrsteilnehmern mit welchen typischen Geschwindigkeiten zu erwarten ist und/oder welche Geschwindigkeiten aufgrund aktuell vorliegender Arten von Verkehrswegen (z.B. Straßen innerorts, außerorts oder Autobahn) und/oder allgemein geltender Höchstgeschwindigkeiten zu erwarten sind.

Bei einem weiteren Aspekt, der auf der vorstehenden Variante c) aufbaut, wird dann, wenn der beobachtete Zustand der Verkehrsinfrastruktur eine mangelnde Befahrbarkeit zumindest eines Teils der Umgebung anzeigt, die Abmessung des Beobachtungsbereichs derart festgelegt, dass ein Anteil des nicht befahrbaren Teils an dem Beobachtungsbereich unterhalb eines zulässigen Maximalanteils liegt.

Anders ausgedrückt kann der Beobachtungsbereich durch die Abmessungsfestlegung derart definiert werden, dass dieser die nicht befahrbaren Bereich lediglich zu geringen Teilen oder auch gar nicht enthält (d.h. der zulässige Maximalanteil kann auch 0 % betragen). Dies ermöglicht, dass tatsächlich nur derjenige Beobachtungsbereich ausgewertet wird, in dem sich andere Verkehrsteilnehmer aufhalten können. Insbesondere können auf diese Weise Fehldetektionen von z.B. Baustellen und deren Gerätschaften als andere Verkehrsteilnehmer vermieden werden, die sich in dem nicht befahrbaren Anteil aufhalten. Insbesondere kann per Kameraüberwachung und ferner insbesondere per Bildauswertung und/oder Verkehrsschildererkennung eine Baustelle als nicht befahrbarer Anteil erkannt werden. Auch können stehende Fahrzeuge als Hindernisse erkannt werden, die eine Fahrspur zumindest temporär blockieren, sodass dort eine mangelnde Befahrbarkeit vorliegt. Ebenso können abbiegende Fahrzeuge, die temporär während des Abbiegevorgangs Fahrspuren blockieren, die entsprechende Fahrspur zumindest temporär nicht befahrbar gestalten und kann der Beobachtungsbereich entsprechend reduziert werden.

Es versteht sich, dass auch zunächst ein initialer Beobachtungsbereich gemäß jeglicher hierin geschilderter Variante festgelegt werden kann, dann aber aufgrund eines festgestellten nicht befahrbaren Anteils die Abmessungen des Beobachtungsbereiches in der geschilderten Weise zum Definieren eines tatsächlich beobachteten bzw. ausgewerteten Beobachtungsbereiches angepasst werden können.

Eine Weiterbildung sieht vor, dass dann, wenn der beobachtbare Anteil einen nicht-beobachtbaren Anteil des Beobachtungsbereichs umschließt (also an wenigstens zwei Seiten umgibt und/oder zwischen sich einschließt oder beidseitig an diesem eingrenzt), eine maximal mögliche Geschwindigkeit eines anderen (insbesondere erwarteten) Verkehrsteilnehmers ermittelt wird, der sich potentiell in dem nicht-beobachtbaren Bereich befindet. Dieses Szenario stellt insbesondere auf den Fall ab, dass ein kleiner Anteil des Beobachtungsbereichs, der zwischen beobachtbaren Anteilen liegt, nicht beobachtbar ist, da er z.B. durch ein lokales Hindernis verdeckt ist. In diesem nicht-beobachtbaren Anteil kann zunächst von einem erwarteten Verkehrsteilnehmer und dessen erwarteter Geschwindigkeit ausgegangen werden. Erneut kann dann aber festgestellt werden, dass, wenn der Verkehrsteilnehmer nach einer gewissen Zeit, die abhängig von der Größe des nicht-beobachtbaren Anteils ist, nicht in den beobachtbaren Anteil gelangt ist, dieser sich nicht mit der entsprechenden Geschwindigkeit in dem nicht-beobachtbaren Anteil bewegt haben kann.

Als mögliches Gefahrenpotential verbliebe dann noch das Szenario, dass ein in dem nicht-beobachtbaren Anteil befindlicher Verkehrsteilnehmer mit einer deutlich geringeren Geschwindigkeit fährt, was aber als gefahrlos bewertet werden kann, da ausreichend Reaktionsmöglichkeiten bestehen. Alternativ kann der Fahrer aus dem Stand maximal beschleunigen und mit der bis zum Erreichen eines beobachtbaren Anteils maximal aufbaubaren Geschwindigkeit in den entsprechenden Anteil eintreten. Letzteres stellt ein Beispiel einer maximal möglichen Geschwindigkeit dar, die der andere Verkehrsteilnehmer in dem nicht-beobachtbaren Anteil (z.B. bis zum unmittelbaren Austreten aus diesem) aufbauen kann. Es kann dann bestimmt werden, ob der Verkehrsteilnehmers eine Gefahr für das Befahren des Konfliktbereichs (also das Durchführen des geplanten Fahrmanövers) darstellt (d.h. den Konfliktbereich während des Fahrmanövers erreichen kann) und kann darauf basierend der Fahrzeugbetrieb gesteuert werden. Wenn die Gefahr nicht besteht, kann das Fahrmanöver wie geplant durchgeführt werden.

Die Erfindung betrifft auch ein Steuergerät für ein Kraftfahrzeug, das dazu eingerichtet ist, ein Verfahren nach einem der vorangehenden Aspekte auszuführen. Das Steuergerät kann digital und/oder elektronisch betreibbar sein. Es kann wenigstens eine Prozessoreinrichtung und/oder wenigstens eine Speichereinrichtung aufweisen. Auf der Speichereinrichtung können Programmanweisungen hinterlegt sein, die bei Ausführen durch die Prozessoreinrichtung das Steuergerät zur Vornahme und/oder Durchführung jeglicher hierin geschilderter Maßnahmen und Verfahrensschritte veranlassen können. Insbesondere kann das Steuergerät mit einer Fahrmanöver- und/oder Fahrroutenplanungseinheit verbunden sein, insbesondere mit einem Steuergerät, das eine solche Planung ausführt. Ebenso kann das Steuergerät eine Softwarekomponente aufweisen, die eine solche Planung ausführt. Allgemein kann das Steuergerät dazu eingerichtet sein, ein Verfahren gemäß jeglichen der geschilderten Aspekte und auch mit jeglichen darin geschilderten Varianten und/oder Weiterbildungen auszuführen. Ausführungsbeispiele der Erfindung werden im Folgenden anhand der beigefügten schematischen Figuren erläutert. Gleichartige oder gleichbleibende Bezugszeichen können darin mit gleichen Bezugszeichen versehen sein.
- Fig. 1 bis 3: zeigen beispielhafte Fahrmanöver sowie dafür definierte Konflikt- und Beobachtungsbereiche.
- Fig. 4 bis 6: zeigen beispielhafte Situationen, in denen ein Beobachtungsbereich nur anteilig durch ein Fahrzeug beobachtbar bzw. erfassbar ist.
- Fig. 7: zeigt ein beispielhaftes Ablaufschema eines erfindungsgemäßen Verfahrens.

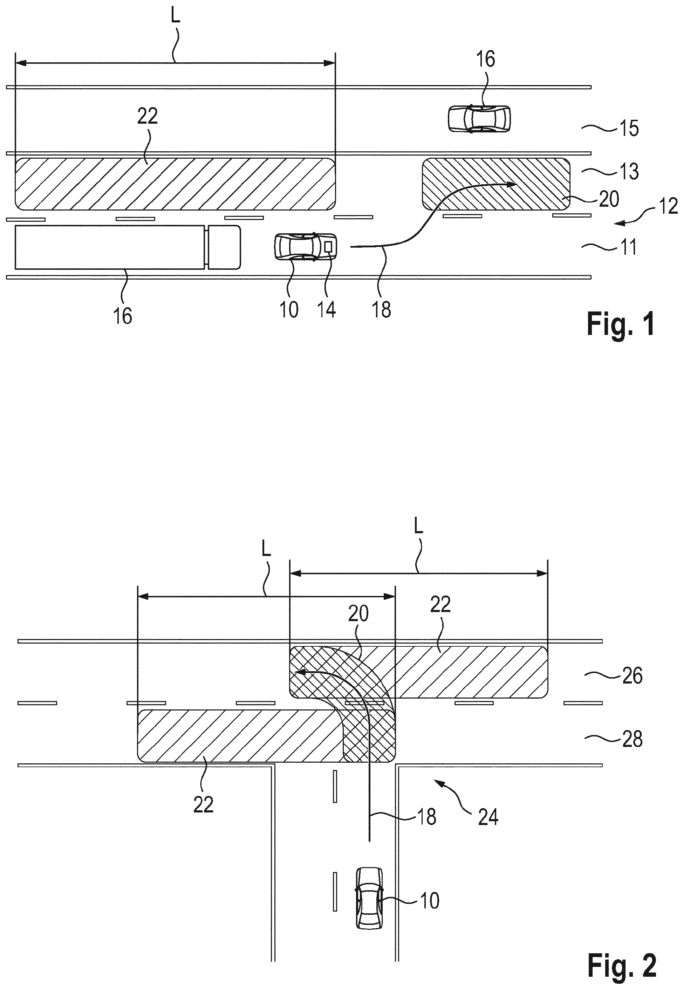

In den nachstehenden Figuren werden jeweils Situationen geschildert, in denen Ausführungsbeispiele des hierin offenbarten Verfahrens ausgeführt werden. Diese Verfahren werden jeweils von einem Steuergerät 14 eines Kraftfahrzeugs 10 in der hierin geschilderten Weise durchgeführt. Die Figuren 1 bis 6 zeigen jeweils Draufsichten auf beispielhafte Betriebssituationen und insbesondere Fahrmanöver eines Kraftfahrzeugs (Egofahrzeugs) 10. In diesem Kontext eingetragene Bewegungspfeile und/oder Konflikt- und Beobachtungsbereiche sind virtueller Art und können z.B. in einem Umfeldmodell des Kraftfahrzeugs 10 mit entsprechenden Abmessungen, Positionen und/oder Erstreckungen definiert sein. Das Kraftfahrzeug 10 wird in jedem der gezeigten Beispiele zumindest teilautonom und vorzugsweise vollautonom bzw. vollautomatisch betrieben und insbesondere gelenkt und/oder beschleunigt.

Das Kraftfahrzeug 10 umfasst ein lediglich schematisch angedeutetes Steuergerät 14, das das geplante Fahrmanöver erhält oder ermittelt sowie jegliche hierin geschilderten verfahrensgemäßen Maßnahmen ausführt, insbesondere die Ermittlung des Konfliktbereichs 20 samt dazugehöriger Definitionen von Beobachtungsbereichen 22. Die nachstehenden Figuren gehen jeweils von einem gleichartigen Kraftfahrzeug 10 mit einem gleichartigen Steuergerät 14 aus, auch wenn Letztere dort nicht noch einmal gesondert eingetragen ist.

In Fig. 1 befindet sich das Kraftfahrzeug 10 auf der rechten Fahrspur 11 einer zweispurigen Straße 12. Gezeigt ist auch eine weitere Fahrspur 15, auf der andere Verkehrsteilnehmer 16 (beispielhaft ein anderes Kraftfahrzeug) in entgegengesetzter Richtung fahren. Als ein weiterer beispielhafter Verkehrsteilnehmer 16 ist ein Lastkraftwagen auf derselben Fahrspur 11 wie das Kraftfahrzeug 10 und hinter diesem positioniert.

Das Kraftfahrzeug 10 möchte, wie durch einen Bewegungspfeil 18 angedeutet, als ein geplantes Fahrmanöver einen Fahrspurwechsel von der rechten auf die linke Fahrspur 11, 13 durchführen. Der geplante bzw. anvisierte Bereich der linken Fahrspur 13, in den das Kraftfahrzeug 10 einfahren möchte, ist ein Beispiel für einen Konfliktbereich 20. So können sich in diesem Konfliktbereich 20 andere Verkehrsteilnehmer 16 befinden oder während des Fahrmanövers darin einfahren, was zu einer möglichen Kollision führen kann.

Um sicherzustellen, dass das Fahrzeug 10 tatsächlich in den Konfliktbereich 20 einfahren kann, wird daher basierend auf dem geplanten Fahrmanöver und dem dazugehörigen Konfliktbereich 20 ein Beobachtungsbereich 22 bestimmt. Dieser Beobachtungsbereich 22 ist durch das Fahrzeug 10 mittels nicht gesondert dargestellter Umfeldsensoren herkömmlicher Art zu überwachen. Genauer gesagt ist im Rahmen dieser Überwachung sicherzustellen, dass sich kein anderer Verkehrsteilnehmer 16 in dem Beobachtungsbereich 22 befindet. Wie nachstehend noch erläutert, kann es auch in bestimmten Situationen ausreichend sein, zu ermitteln, dass ein sich in dem Beobachtungsbereich 22 befindender anderer Verkehrsteilnehmer 16 kein Kollisionsrisiko darstellt, da er beispielsweise nicht droht, während des Fahrmanövers in den Konfliktbereich 20 einzufahren.

Die vorliegende Lösung sieht allgemein vor, den Beobachtungsbereich 22 nicht pauschal und/oder unabhängig von der aktuellen Situation festzulegen. Anders ausgedrückt ist es bevorzugt nicht vorgesehen, in Abhängigkeit eines ermittelten Fahrmanövers und/oder eines dazugehörigen potentiellen Konfliktbereichs 20 stets denselben unveränderten Beobachtungsbereich 22 festzulegen. Stattdessen ist vorteilhafterweise vorgesehen, wenigstens eine Abmessung situationsabhängig zu bestimmen. In Fig. 1 betrifft dies beispielhaft die Länge L des Beobachtungsbereichs 22 entlang der linken Fahrbahn 13. Die situationsabhängige Abmessungsfestlegung erfolgt bevorzugt in Echtzeit und/oder in Abhängigkeit aktueller und/oder veränderlicher Umgebungs- oder Betriebsgrößen des Fahrzeugs 10 und/oder anderer Verkehrsteilnehmer 16.

Im Fall von Fig. 1 wird die Abmessung L des Beobachtungsbereichs 22 bevorzugt dynamisch in Abhängigkeit der Geschwindigkeit des Kraftfahrzuges (kurz: Fahrzeugs) 10 bestimmt. Ist diese hoch, kann davon ausgegangen werden, dass zu auf der linken Fahrspur 13 befindlichen anderen Verkehrsteilnehmern 16 (nicht gezeigt) vergleichsweise schnell ein gewünschter Mindestabstand und/oder eine gewünschte Differenzgeschwindigkeit aufgebaut werden kann. Hierdurch können Kollisionen ausgeschlossen oder zumindest deren Stärke zuverlässig begrenzt werden. Entsprechend kann bei hohen Geschwindigkeiten des Kraftfahrzeugs 10 die Abmessung L des Beobachtungsbereichs 22 geringer ausfallen, da weiter entfernt liegende andere Verkehrsteilnehmer 16 auf der linken Fahrspur 13 (nicht gezeigt) eventuell eine geringe Kollisionsgefahr bedeuten. Die Bewertung der Kollisionsgefahr kann jedoch eine Kenntnis der Geschwindigkeit der anderen Verkehrsteilnehmer 16 voraussetzen und lässt sich zuverlässiger anhand einer Differenzgeschwindigkeit bestimmen. Allgemein kann gelten: Desto geringer die Differenzgeschwindigkeit zwischen dem Ego-Kraftfahrzeug 10 und möglicherweise von hinten kommenden Fahrzeugen bzw. anderen Verkehrsteilnehmer 16 ist, umso geringer bzw. kürzer kann der Beobachtungsbereich 22 sein. Die Geschwindigkeit anderer Verkehrsteilnehmer 16 kann vom Fahrzeug 10 sensorisch erfasst werden.

In Fig. 2 ist das Kraftfahrzeug 10 im Kontext eines anderen geplanten Fahrmanövers gezeigt. Gemäß dem geplanten Bewegungspfeil 18 möchte das Fahrzeug 10 auf eine kreuzende Straße 24 einbiegen. Genauer gesagt möchte es auf den in Fig. 2 oberen Fahrstreifen 26 einbiegen und muss dabei einen in Fig. 2 unteren Fahrstreifen 28 der Straße 24 überqueren. Der mit dem geplanten Fahrmanöver zusammenhängende Konfliktbereich 20 erstreckt sich folglich über beide Fahrspuren 26, 28 der Straße 24. Folglich sind auch zwei lediglich beispielhaft getrennt voneinander dargestellte Beobachtungsbereiche 22 definiert, die sich jeweils entlang einer der Fahrspuren 26, 28 erstrecken. In diesem Fall haben andere Verkehrsteilnehmer 16 (nicht gezeigt) auf beiden der Fahrspuren 26, 28 Vorfahrt gegenüber dem Fahrzeug 10. Weist das Fahrzeug 10 allerdings eine hohe Geschwindigkeit auf, kann es den Konfliktbereich 20 schnell wieder verlassen. Entsprechend können dann die Beobachtungsbereiche 22 und insbesondere deren Längen L mit zunehmender Geschwindigkeit des Fahrzeugs 10 geringer ausfallen.

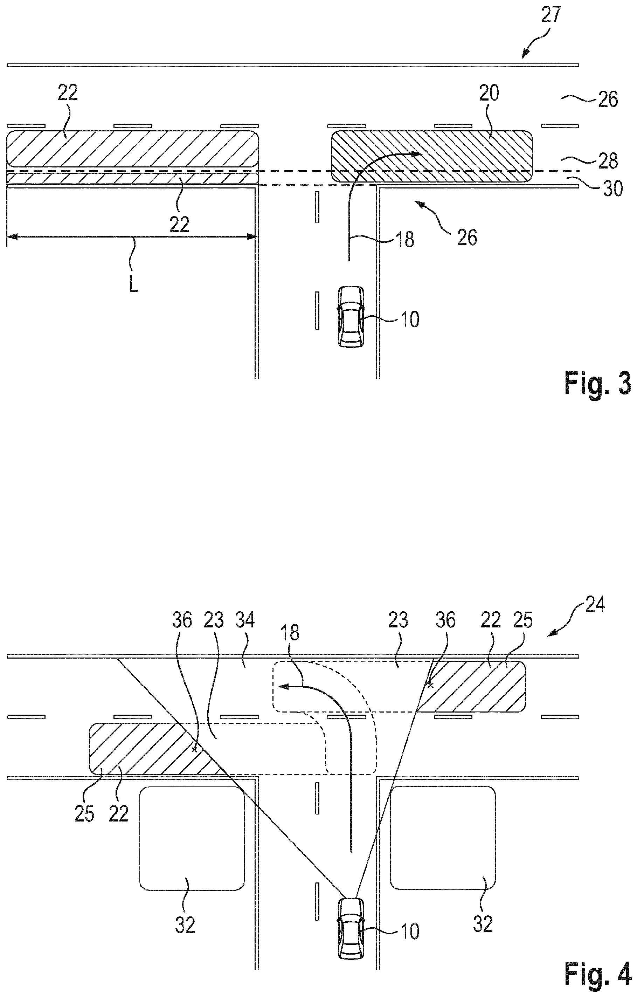

In Fig. 3 ist als geplantes Fahrmanöver das Einbiegen auf eine Vorfahrtsstraße 27 analog zu Fig. 2 gezeigt. Gemäß dem geplanten Bewegungspfeil 18 soll nun aber auf die zum Kraftfahrzeug 10 näherliegende untere Fahrspur 28 und nicht auf die obere Fahrspur 26 eingebogen werden. Ebenfalls in Abweichung von Fig. 2 ist dabei auch ein Fahrradweg 30 zu überqueren. Der Konfliktbereich 20 erfasst somit sowohl Anteile des Fahrradwegs 30 als auch der unteren Fahrspur 28.

Wie angedeutet, werden für die Fahrspur 28 und den Fahrradweg 30 bevorzugt separate Beobachtungsbereiche 22 definiert oder wird der Beobachtungsbereich 22 entsprechend unterteilt. Hierdurch kann festgelegt werden, welche Art von Verkehrsteilnehmer in dem entsprechenden Beobachtungsbereich 22 bzw. Anteil des Beobachtungsbereichs 22 erwartet wird und primär zu erfassen ist.

Allgemein kann die Verkehrsteilnehmer-Art verwendet werden, um eine Form und/oder Größe eines Beobachtungsbereichs 22 zu definieren, beispielweise eine (Breiten- und/oder Höhen-) Abmessung quer zu einer (Längen-) Erstreckung in die erwartete Fahrrichtung.

Zusätzlich oder alternativ kann basierend auf der erwarteten Verkehrsteilnehmer-Art eine sensorische Umfelderfassung und/oder algorithmische Sensordatenauswertung angepasst werden. Die sensorische oder algorithmische Aufmerksamkeit kann dann z.B. auf bestimmte Umgebungsbereiche (sog. "Regions of Interest") gerichtet werden, in denen die Art von Verkehrsteilnehmer erwartet wird. Beispielsweise kann der Sensor in diesem Bereich höherauflösend arbeiten oder kann der algorithmischen Auswertung dieses Bereichs bzw. der hierfür erfassten Sensordaten mehr Rechenkapazität zugeteilt werden. Beispielsweise können die Sensordaten dieses Bereichs ohne signifikante Auflösungsreduzierung algorithmisch verrechnet werden.

Entsprechend werden in Fig. 3 also Beobachtungsbereiche 22 nach Art der erwarteten Verkehrsteilnehmer definiert. In Abweichung von Fig. 2 kann dabei insbesondere vorgesehen sein, dass eine Längenabmessung L des Beobachtungsbereiches 22, der den Radweg 30 erfasst, geringer ausfällt als eine sich parallel hierzu erstreckende Abmessung L des Beobachtungsbereichs 22 im Bereich der Fahrspur 28. Dem liegt der Gedanke zugrunde, dass die Radfahrer erwartungsgemäß eine geringere erwartete Geschwindigkeit aufweisen und somit nur in geringer Distanz zu dem Konfliktbereich 22 ein tatsächliches Kollisionsrisiko darstellen. Anders ausgedrückt können weiter von dem Konfliktbereich 20 entfernte Radfahrer während des Durchführens des Fahrmanövers (also dem Einfahren in den Konfliktbereich 20) den Konfliktbereich 20 voraussichtlich nicht erreichen und daher dort keine Kollision verursachen.

Anhand von Fig. 3 wird im Folgenden auch der Fall einer Beobachtung der Verkehrsinfrastruktur und entsprechende Definitionen von Beobachtungsbereichen 22 erläutert, auch wenn dies nur teilweise aus Fig. 3 hervorgeht. So ist der Fall denkbar, dass der Radweg 30 aufgrund dort stattfindender Bauarbeiten gesperrt ist. Das Fahrzeug 10 kann dies z.B. kamerabasiert und/oder mittels einer Verkehrsschildererkennung erkennen. Entsprechend kann der Beobachtungsbereich 22 im Bereich des Radwegs 30 einem Umgebungsteil entsprechen, der nicht von der Baustelle betroffen ist, kann also die Abmessung L entsprechend reduziert werden. Optional kann die Abmessung L auch auf den Wert null gesetzt werden, kann also der Beobachtungsbereich 22 im Bereich des Radweges 30 generell wegfallen. In diesem Fall kann es aber zusätzlich erforderlich sein, in dem verbleibenden Beobachtungsbereich 22 entlang der Fahrspur 28 sowohl primär Kraftfahrzeuge als auch Radfahrer als andere Verkehrsteilnehmer 16 zu erfassen.

Letzteres bedeutet, dass eine weitere Art von Verkehrsteilnehmer 16 in diesem Beobachtungsbereich 22 erwartet wird. Allgemein kann es erforderlich sein, Abmessungen eines Beobachtungsbereichs 22 neu festzulegen und insbesondere zu vergrößern, wenn sich die weitere Art von Verkehrsteilnehmer 16 durch eine höhere erwartete Geschwindigkeit auszeichnet. Aufgrund einer ggf. erhöhten Wendigkeit oder auch Manövrierbarkeit (insbesondere von Radfahrern), kann es zudem erforderlich sein, Abmessungen und insbesondere Grenzen des Beobachtungsbereichs 22 genauer und/oder feiner zu wählen. Ebenso können aufgrund abweichender Größenverhältnisse (kleinere oder schmalere Radfahrer im Vergleich zu Kraftfahrzeugen) feiner aufgelöste (z.B. sensorische und/oder algorithmische) Erfassungen in dem Beobachtungsbereich 22 erforderlich sein.

Ein Vorteil der Erkenntnis, dass bestimmte Beobachtungsbereiche 22 nicht von anderen Verkehrsteilnehmern 16 befahrbar sind, ist zudem, dass das Fahrzeug 10 direkt durch diese Beobachtungsbereiche 22 hindurch und z.B. direkt an eine kreuzende Straße heranfahren kann. Zudem kann es sich in einem solchen Beobachtungsbereich 22 beliebig ausrichten, bspw. in Vorbereitung eines Abbiegevorgangs.

In Fig. 4 ist ein analoges geplantes Fahrmanöver wie in Fig. 2 gezeigt. In diesem Fall befinden sich jedoch Sichthindernisse 32, z.B. in Form von Bauwerken oder Bäumen, nahe des Fahrzeugs 10. Eingetragen ist ein Erfassungsbereich (oder auch Sichtbereich) 34 des Fahrzeugs 10, in dem die Umgebung durch das Fahrzeug 10 sensorisch erfasst und dadurch sensorisch beobachtet bzw. sensorisch überwacht werden kann. Man erkennt, dass der Erfassungsbereich 34 die Beobachtungsbereiche 22 nicht vollständig abdeckt. Es existiert folglich ein sich mit dem Erfassungsbereich 34 überlappender beobachtbarer Anteil 23 eines jeden Beobachtungsbereichs 22 wie auch ein nicht-beobachtbarer Anteil 25, welcher außerhalb des Erfassungsbereichs 34 liegt.

In diesem Fall kann zunächst in der hierin geschilderten Weise ermittelt werden, welche Art von Verkehrsteilnehmer innerhalb des Beobachtungsbereichs 22 erwartet wird. Gemäß einer Variante kann diesem Verkehrsteilnehmer eine erwartete Größe (insbesondere Maximalgröße und insbesondere Maximallänge) zugeordnet sein. Überschreitet diese Größe den nicht-beobachtbaren Anteil 25 eines jeden Beobachtungsbereichs 22, kann davon ausgegangen werden, dass sich kein entsprechender anderer Verkehrsteilnehmer 16 (in Fig. 4 nicht gezeigt) innerhalb des Beobachtungsbereichs 22 und insbesondere in dem nicht-beobachtbaren Anteil 25 befindet. Ist dies nicht der Fall, kann dieses Szenario nicht ausgeschlossen werden.

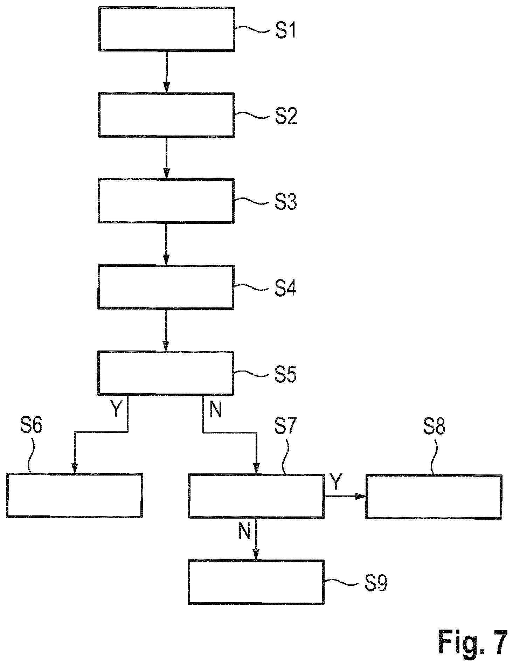

Alternativ oder zusätzlich kann für den je Beobachtungsbereich 22 erwarteten Verkehrsteilnehmer 16 (in Fig. 4 nicht gezeigt) eine erwartete Geschwindigkeit ermittelt werden, gegebenenfalls zuzüglich eines Sicherheitspuffers oder Sicherheitsaufschlags. Es kann dann bestimmt werden, ob die Gefahr besteht, dass ein Verkehrsteilnehmer während der geplanten Durchführdauer des Fahrmanövers und aufgrund der erwarteten Geschwindigkeit aus dem nicht-beobachtbaren Anteil 25 in den Konfliktbereich 22 einfahren kann. Als zusätzliche Sicherheitsmaßnahme kann dabei davon ausgegangen werden, dass der Verkehrsteilnehmer relativ zu dem Konfliktbereich 20 am weitesten vorn innerhalb des nicht-beobachtbaren Anteils 35 positioniert ist, also sich in der kürzestmöglichen Distanz zum Konfliktbereich 20 befindet. In Fig. 4 sind entsprechende beispielhafte Positionen 36 innerhalb der nicht-beobachtbaren Anteile 25 eingetragen. Wird ermittelt, dass insbesondere ausgehend von diesen Positionen 36 ein Erreichen des Konfliktbereichs 20 durch den Verkehrsteilnehmer nicht möglich ist, wird das Fahrmanöver in der ursprünglich geplanten Weise durchgeführt. Ansonsten findet es in abgewandelter Form statt, wofür Beispiele vorstehend genannt wurden und anhand von Fig. 7 gesondert erläutert werden.

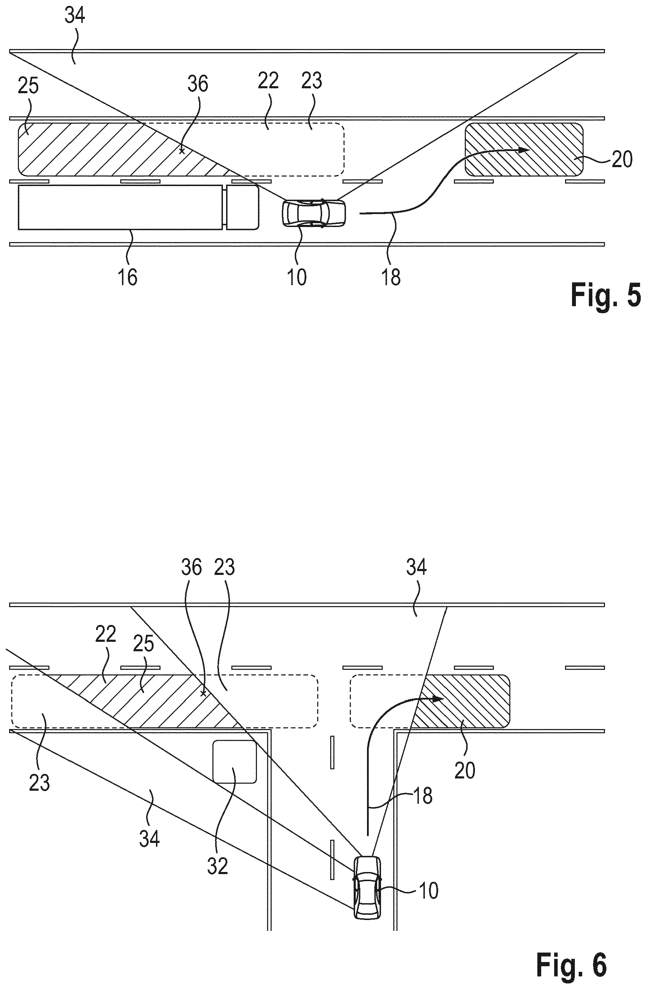

In Fig. 5 ist eine zur Fig. 1 analoge Darstellung gezeigt, wobei auch in diesem Fall ein Beobachtungsbereich 34 des Fahrzeugs 10 eingetragen ist. In diesem Fall wird jedoch davon ausgegangen, dass der hinter dem Fahrzeug 10 positionierte andere Verkehrsteilnehmer 16 in Form des Lastkraftwagens die (Sensor-)Sicht des Fahrzeugs 10 in die Umgebung zumindest teilweise verdeckt. Entsprechend wird auch hier der Beobachtungsbereich 22 in einen beobachtbaren und nicht-beobachtbaren Anteil 23, 25 unterteilt. Die Gefahr einer Kollision mit einem in dem nicht-beobachtbaren Bereich 25 potentiell vorhandenen anderen Verkehrsteilnehmer 16 kann analog wie in Fig. 4 anhand einer erwarteten Größe und/oder erwarteten Geschwindigkeit insbesondere ausgehend von einer analogen Position 36 beurteilt werden.

In Fig. 6 ist ein Sonderfall der teilweisen Verdeckung eines Beobachtungsbereichs 22 aus Fahrzeugsicht gezeigt. Das beispielhaft dargestellte Fahrmanöver entspricht einem Einbiegevorgang analog zur Fig. 3. In Abweichung von Fig. 3 ist dabei aber kein Radweg 30 vorgesehen. Aufgrund eines Hindernisses 32 wird wiederum die Sicht des Fahrzeugs 10 bzw. von dessen Umfeldsensoren auf den Umgebungsbereich 22 versperrt. Allgemein wird der Begriff "Sicht" in dieser Offenbarung nicht derart verwendet, dass darunter ausschließlich optische oder kamerabasierte Erfassungen zu verstehen sind. Stattdessen können hierunter auch jegliche andere Erfassungsprinzipien von Umfeldsensoren fallen, insbesondere Ultraschall- oder Radarerfassungen. Insofern kann unter dem Begriff "Sicht" spezieller der Fall verstanden werden, dass Erfassungen durch Umfeldsensoren des Fahrzeugs 10 möglich sind bzw. ein Erfassungsbereich 34 hiervon sich entsprechend in der Umgebung erstreckt.

Der Erfassungsbereich 34 des Fahrzeugs 10 ist zweigeteilt, da aus Fahrzeugsicht schräg hinter dem Hindernis 32 keine sensorischen Erfassungen möglich sind. Ein dort positionierter Anteil 25 des Beobachtungsbereichs 22 ist entsprechend nicht beobachtbar. Der nicht-beobachtbare Anteil 25 wird durch beobachtbare Anteile 23 eingerahmt bzw. eingeschlossen oder eingegrenzt. Somit befindet sich zwischen den beobachtbaren Anteilen 23 des Beobachtungsbereichs 22 ein nicht beobachtbarer Anteil 25. Zum Durchführen des geplanten Fahrmanövers ist sicherzustellen, dass kein sich in dem nicht beobachtbaren Anteil 25 befindender Verkehrsteilnehmer 16 (nicht dargestellt) womöglich in den Konfliktbereich 20 einfahren kann. Erneut kann dies anhand der Art erwarteter Verkehrsteilnehmer und insbesondere anhand der Art von deren Größe bestimmt werden. Ist der nicht-beobachtbare Anteil 25 kleiner als die erwartete Größe, kann davon ausgegangen werden, dass sich dort kein entsprechender Verkehrsteilnehmer 16 befindet.

Zusätzlich oder alternativ kann anhand der erwarteten Geschwindigkeit bestimmt werden, ob ein etwaiger in dem nicht-beobachtbaren Anteil 25 befindlicher Verkehrsteilnehmer 16 bereits hätte aus diesem ausfahren und in den angrenzenden und näher zum Konfliktbereich 20 positionierten beobachtbaren Anteil 23 einfahren müssen. Ist dies nicht der Fall, kann darauf geschlossen werden, dass sich in dem nicht-beobachtbaren Anteil 25 kein entsprechender Verkehrsteilnehmer 16 befindet.

Als bevorzugte weitere Überprüfung kann das Szenario untersucht werden, dass der Teilnehmer in dem nicht-beobachtbaren Anteil 25 steht und/oder sich mit einer sehr geringen Geschwindigkeit bewegt und vor oder beim Durchführen des Fahrmanövers beginnt, maximal zu beschleunigen. Vorzugsweise erneut ausgehend von einer am nächsten zum Konfliktbereich positionierten Position 36 innerhalb des nicht-beobachtbaren Anteils 25 kann berechnet werden, welche Strecke ein entsprechender Verkehrsteilnehmer 16 bei dessen erwarteter erzielbarer Geschwindigkeit und/oder Beschleunigung während dem Durchführen des Fahrmanövers zurücklegt. Reicht diese Strecke aus, um in den Konfliktbereich 20 einzufahren, kann ein erhöhtes Konfliktrisiko festgestellt und kann das Fahrmanöver nicht wie geplant durchgeführt werden. Wird hingegen eine mangelnde Erreichbarkeit des Konfliktbereichs 20 bestimmt, kann das Fahrmanöver in der geplanten Weise durchgeführt werden, da ein solcher nicht erfasster potentieller Verkehrsteilnehmer keine Gefahr darstellt.

In Fig. 7 wird ein beispielhafter Verfahrensablauf erläutert, der auf die vorangehenden Ausführungsbeispiele Bezug nimmt. In einem Schritt S1 wird festgestellt, dass das Kraftfahrzeug 10 ein geplantes Fahrmanöver durchführen möchte, das mit einem Konfliktrisiko mit anderen Verkehrsteilnehmern einhergeht. Hierfür kann das Fahrmanöver mit entsprechend vorab definierten konfliktbehafteten Fahrmanövern verglichen werden. Ebenso kann anhand von Karteninformationen bestimmt werden, dass andere Fahrspuren oder allgemein potentielle Konfliktbereiche gemäß dem Fahrmanöver befahren werden sollen.

In einem Schritt S2 wird der zu dem geplanten Fahrmanöver dazugehörige Konfliktbereich 20 ermittelt, beispielsweise anhand von Karteninformationen und/oder dynamisch im Kontext eines geplanten Spurwechsels. In einem Schritt S3 wird daraufhin ermittelt, welche Beobachtungsbereiche 22 prinzipiell zu definieren sind. Die prinzipielle Zuordnung benötigter Beobachtungsbereiche 22 für einen Konfliktbereich 10 kann vordefiniert sein und beispielsweise in einer Speichereinrichtung der Steuereinrichtung 14 aus Fig. 1 hinterlegt sein. So können z.B. bei dem geplanten Abbiegevorgang aus Fig. 1 standardgemäß andere Beobachtungsbereiche 22 relevant sein, die beide Fahrspuren 26, 28 erfassen, als bei dem Abbiegevorgang aus Fig. 3, bei dem lediglich eine Fahrspur 28 zu beobachten ist.

In einem Schritt S4, der auch parallel zu dem Schritt S3 ausführbar ist, wird bevorzugt in Echtzeit und/oder situationsabhängig wenigstens eine Abmessung L von wenigstens einem der zu definierenden Beobachtungsbereiche 22 festgelegt. Je nach der aktuellen Fahrsituation und/oder dem geplanten Fahrmanöver kommen hierfür jegliche der hierin offenbarten und insbesondere anhand der Figuren 1 bis 3 erläuterten zu berücksichtigenden Umstände in Betracht.

In einem Schritt S5 wird ermittelt, ob der gesamte Beobachtungsbereich 22 beobachtbar ist oder ein beobachtbarer Anteil 25 oberhalb eines zulässigen Mindestwertes liegt (und/oder ein nicht-beobachtbarer Anteil 23 unterhalb eines Maximalwerts). Ist dies der Fall (Pfeil Y in Fig. 7), wird das geplante Fahrmanöver im Schritt S6 in der ursprünglich geplanten Weise durchgeführt. Ist dies nicht der Fall (Pfeil N in Fig. 7), wird im Schritt S7 vorzugsweise mittels einer anhand der Figuren 4 bis 6 erläuterten Varianten ermittelt, ob sich in dem nicht-beobachtbaren Anteil 25 ein nicht beobachtbarer bzw. nicht erkannter Verkehrsteilnehmer 16 aufhalten könnte, der eine Kollisionsgefahr für das Durchführen des Fahrmanövers bedeuten kann.

Kann ausgeschlossen werden, dass ein solches Konfliktpotential besteht (Pfeil Y), wird in Schritt S8 das Fahrmanöver in der ursprünglich geplanten Weise durchgeführt. Kann ein solches Kollisionsrisiko nicht ausgeschlossen werden (Pfeil N), wird im Schritt S9 das Durchführen des Fahrmanövers und das damit zusammenhängende Befahren des Konfliktbereichs 20 abweichend von der ursprünglich geplanten Weise gesteuert.

Insbesondere kann dann eine Fahrzeuggeschwindigkeit 10 reduziert werden, um noch mehr Zeit bis zum Erreichen des Konfliktbereichs 20 verstreichen zu lassen. Dies erhöht die Chance, dass z.B. unter Berücksichtigung einer erwarteten Geschwindigkeit potentiell verdeckter Verkehrsteilnehmer 16 deren Ausfahren aus dem nicht-beobachtbaren Anteil 25 und/oder Einfahren in den Konfliktbereich 20 nachhaltig ausgeschlossen werden kann. Insbesondere kann die Geschwindigkeit auch soweit reduziert werden, dass das Fahrzeug 10 vorübergehend anhält. Auch ist es prinzipiell möglich, dass das Kraftfahrzeug 10 seine Position innerhalb einer Fahrspur ändert und näher an der Seite fährt, um den Beobachtungsbereich 34 bzw. den beobachtbaren Anteil 23 des Beobachtungsbereichs 22 potentiell zu vergrößern.

Alternativ oder zusätzlich kann das Fahrzeug 10 mit einer stark reduzierten und insbesondere einer vorbestimmten Minimalgeschwindigkeit in dem Konfliktbereich 20 einfahren. Der Beobachtungsbereich 22 kann dabei fortlaufend weiter überwacht werden. Aufgrund der Minimalgeschwindigkeit kann rechtzeitig gebremst oder beschleunigt werden, um eine Kollision mit nicht erfassten Verkehrsteilnehmern zu verhindern.

Zusammengefasst wurden anhand der vorstehenden Ausführungsbeispiele Möglichkeiten aufgezeigt, um einen Beobachtungsbereich 22 dynamisch und möglichst situationsgerecht zu bestimmen. Hierdurch wird ermöglicht, dass der Beobachtungsbereich 22 so groß wie nötig, aber auch so klein wie möglich ausfällt. Ferner wurden Möglichkeiten aufgezeigt, wie mit Szenarien umgegangen werden kann, in denen Beobachtungsbereiche nur teilweise beobachtbar sind.

### Bezugszeichenliste

- 10: Fahrzeug (Kraftfahrzeug)
- 11: Fahrspur
- 12: Straße
- 13: Fahrspur
- 14: Steuergerät
- 15: Fahrspur
- 16: Verkehrsteilnehmer
- 18: Bewegungspfeil
- 20: Konfliktbereich
- 22: Beobachtungsbereich
- 23: beobachtbarer Anteil
- 24: (kreuzende) Straße
- 25: nicht-beobachtbarer Anteil
- 26: Fahrspur
- 27: Vorfahrtsstraße
- 28: Fahrspur
- 30: Radweg
- 32: Hindernisobjekt
- 34: Beobachtungsbereich
- 36: Position zur Bewertung von Kollisionspotential
- L: Abmessung

## Patentansprüche

1. Verfahren zum zumindest teilautonomen Betreiben eines Kraftfahrzeugs (10), mit:
- Erhalten wenigstens eines potentiellen Konfliktbereichs (20), in dem ein Konfliktpotential mit anderen Verkehrsteilnehmern (16) besteht, wobei der Konfliktbereich (20) von dem Kraftfahrzeug (10) gemäß einem geplanten Fahrmanöver befahren werden soll;
- Ermitteln wenigstens eines Beobachtungsbereichs (22), der für das Befahren des Konfliktbereichs (20) zum Vermeiden von Konflikten mit den anderen Verkehrsteilnehmern (16) zu beobachten ist;
wobei wenigstens eine Abmessung (L) des Beobachtungsbereichs (22) unter Berücksichtigung wenigstens einer der folgenden Parameter festgelegt wird:
a) einer Geschwindigkeit des Kraftfahrzeugs (10);
b) einer Art eines in dem Beobachtungsbereich (22) erwarteten Verkehrsteilnehmers (16);
c) einem beobachteten Zustand der Verkehrsinfrastruktur,
mit den Schritten:
- Ermitteln eines durch das Kraftfahrzeug (10) beobachtbaren Anteils (23) und/oder nicht-beobachtbaren Anteils (25) des Beobachtungsbereichs (22) und darauf basierendes Steuern des Befahrens des Konfliktbereichs (20), wobei
wenn der beobachtbaren Anteil (23) unterhalb eines Mindestanteils und/oder nicht-beobachtbare Anteil (25) oberhalb eines Maximalanteils liegt,:
- Erhalten wenigstens einer Art von einem in dem Beobachtungsbereich (22) erwarteten Verkehrsteilnehmer (16);
- Bestimmen, dass sich in dem Beobachtungsbereich (22) kein anderer Verkehrsteilnehmer (16) befindet, auf Basis des beobachtbaren Anteils (23) und/oder des nicht-beobachtbaren Anteils (25) des Beobachtungsbereichs (22) und der Art des Verkehrsteilnehmers (16).

2. Verfahren nach Variante a) von Anspruch 1,
**dadurch gekennzeichnet, dass** die Abmessung (L) mit zunehmender Geschwindigkeit des Kraftfahrzeugs (10) höher ausfällt.

3. Verfahren nach Variante a) von Anspruch 1,
**dadurch gekennzeichnet, dass** dann, wenn in dem Konfliktbereich (20) eine von den anderen Verkehrsteilnehmern (16) befahrene Vorfahrtsstraße (24) liegt, die Abmessung (L) mit zunehmender Geschwindigkeit des Kraftfahrzeugs (10) geringer ausfällt.

4. Verfahren nach Variante b) von Anspruch 1,
**dadurch gekennzeichnet, dass** eine erwartete Geschwindigkeit des erwarteten Verkehrsteilnehmers (16) erhalten wird und die Abmessung (L) größer ausfällt, desto größer die erwartete Geschwindigkeit ist.

5. Verfahren nach Anspruch 4,
**dadurch gekennzeichnet, dass** die erwartete Geschwindigkeit unter Berücksichtigung von Karteninformationen ermittelt wird.

6. Verfahren nach Variante c) von Anspruch 1,
**dadurch gekennzeichnet, dass** dann, wenn der beobachtete Zustand der Verkehrsinfrastruktur eine mangelnde Befahrbarkeit eines Teils der Umgebung anzeigt, die Abmessung (L) des Beobachtungsbereichs (22) derart festgelegt wird, dass ein Anteil des nicht befahrbaren Teils an dem Beobachtungsbereich (22) unterhalb eines zulässigen Maximalanteils liegt.

7. Verfahren nach einem der vorangegangenen Ansprüche,
**dadurch gekennzeichnet, dass** dann, wenn ein nicht-beobachtbarer Anteil (25) des Beobachtungsbereichs (22) zwischen zumindest zwei beobachtbaren Anteilen (23) positioniert ist, eine maximal mögliche Geschwindigkeit eines anderen Verkehrsteilnehmers (16) ermittelt wird, der sich potentiell in dem nicht-beobachtbaren Anteil (25) befindet.

8. Steuergerät (14) für ein Kraftfahrzeug (10), das dazu eingerichtet ist, ein Verfahren nach einem der vorangehenden Ansprüche auszuführen.

## Claims

1. Method for operating a motor vehicle (10) at least partially autonomously, comprising:
- obtaining at least one potential conflict area (20) in which there is a potential for conflict with other road users (16), wherein the conflict area (20) is to be traversed by the motor vehicle (10) according to a planned driving maneuver;
- determining at least one observation area (22) which, for the purpose of traversing the conflict area (20), is to be observed in order to avoid conflicts with the other road users (16);
wherein at least one dimension (L) of the observation area (22) is defined taking into account at least one of the following parameters:
a) a speed of the motor vehicle (10);
b) a type of road user (16) expected in the observation area (22);
c) an observed state of the transport infrastructure,
comprising the steps of:
- determining a portion (23) of the observation area (22) that is observable by the motor vehicle (10) and/or a portion (25) of the observation area that is unobservable by the motor vehicle and controlling the traversing of the conflict area (20) on the basis thereof, wherein
if the observable portion (23) is below a minimum portion and/or the unobservable portion (25) is above a maximum portion:
- obtaining at least one type of road user (16) expected in the observation area (22);
- establishing that there is no other road user (16) in the observation area (22) on the basis of the observable portion (23) and/or the unobservable portion (25) of the observation area (22) and the type of road user (16).

2. Method according to variant a) of claim 1,
**characterized in that** the dimension (L) gets larger as the speed of the motor vehicle (10) increases.

3. Method according to variant a) of claim 1,
**characterized in that** if a priority road (24) traversed by the other road users (16) is located in the conflict area (20), the dimension (L) gets smaller as the speed of the motor vehicle (10) increases.

4. Method according to variant b) of claim 1,
**characterized in that** an expected speed of the expected road user (16) is obtained and the dimension (L) gets larger the greater the expected speed.

5. Method according to claim 4,
**characterized in that** the expected speed is determined taking into account map information.

6. Method according to variant c) of claim 1,
**characterized in that** if the observed state of the traffic infrastructure indicates a lack of traversability of a part of the surroundings, the dimension (L) of the observation area (22) is defined such that a portion of the non-traversable part in relation to the observation area (22) is below a permissible maximum portion.

7. Method according to any of the preceding claims,
**characterized in that** if an unobservable portion (25) of the observation area (22) is positioned between at least two observable portions (23), a maximum possible speed of another road user (16) that is potentially located in the unobservable portion (25) is determined.

8. Control unit (14) for a motor vehicle (10), which is designed to carry out a method according to any of the preceding claims.

## Revendications

1. Procédé permettant de faire fonctionner un véhicule automobile (10) de manière au moins partiellement autonome, comportant :
- l'obtention d'au moins une zone de conflit (20) potentielle dans laquelle il existe un potentiel de conflit avec d'autres usagers de la route (16), dans lequel la zone de conflit (20) doit être parcourue par le véhicule automobile (10) selon une manœuvre de conduite planifiée ;
- la détermination d'au moins une zone d'observation (22) à observer pour parcourir la zone de conflit (20) afin d'éviter les conflits avec les autres usagers de la route (16) ;
dans lequel au moins une dimension (L) de la zone d'observation (22) est déterminée en tenant compte d'au moins un des paramètres suivants :
a) une vitesse du véhicule automobile (10) ;
b) un type d'usager de la route (16) attendu dans la zone d'observation (22) ;
c) un état observé de l'infrastructure de transport,
comportant les étapes :
- de détermination d'une partie (23) observable et/ou d'une partie (25) non observable de la zone d'observation (22) par le véhicule automobile (10) et, sur cette base, de commande du parcours de la zone de conflit (20), dans lequel
si la partie (23) observable est inférieure à une partie minimale et/ou la partie (25) non observable est supérieure à une partie maximale :
- l'obtention d'au moins un type d'usager de la route (16) attendu dans la zone d'observation (22) ;
- la détermination qu'aucun autre usager de la route (16) ne se trouve dans la zone d'observation (22), sur la base de la partie (23) observable et/ou de la partie (25) non observable de la zone d'observation (22) et du type d'usager de la route (16).

2. Procédé selon la variante a) de la revendication 1,
**caractérisé en ce que** la dimension (L) est plus élevée lorsque la vitesse du véhicule automobile (10) augmente.

3. Procédé selon la variante a) de la revendication 1,
**caractérisé en ce que**, si une route prioritaire (24) parcourue par les autres usagers de la route (16) se trouve dans la zone de conflit (20), la dimension (L) est plus faible lorsque la vitesse du véhicule automobile (10) augmente.

4. Procédé selon la variante b) de la revendication 1,
**caractérisé en ce qu'**une vitesse attendue de l'usager de la route (16) attendu est obtenue et la dimension (L) est d'autant plus grande que la vitesse attendue est grande.

5. Procédé selon la revendication 4,
**caractérisé en ce que** la vitesse attendue est déterminée en tenant compte d'informations cartographiques.

6. Procédé selon la variante c) de la revendication 1,
**caractérisé en ce que**, lorsque l'état observé de l'infrastructure de transport indique un manque de praticabilité d'une partie de l'environnement, la dimension (L) de la zone d'observation (22) est déterminée de telle sorte qu'une partie de la partie non praticable de la zone d'observation (22) est inférieure à une partie maximale admissible.

7. Procédé selon l'une des revendications précédentes,
**caractérisé en ce que**, lorsqu'une partie (25) non observable de la zone d'observation (22) est positionnée entre au moins deux parties (23) observables, une vitesse maximale possible d'un autre usager de la route (16), qui se trouve potentiellement dans la partie (25) non observable, est déterminée.

8. Appareil de commande (14) pour un véhicule automobile (10), qui est adapté pour mettre en œuvre un procédé selon l'une des revendications précédentes.
